# EUROPÄISCHE PATENTSCHRIFT

(11) **EP 3 528 977 B1**
(45) Veröffentlichungstag und Bekanntmachung des Hinweises auf die Patenterteilung: **29.09.2021**
(21) Anmeldenummer: 17808774.8
(22) Anmeldetag: 18.10.2017
(51) Int. Cl.: B21D 37/10, B30B 15/04, F16C 29/04, F16C 33/40, G04G 9/04, B21D 43/00

(54) **FÜHRUNGSSÄULE MIT KÄFIGHALTER EINES SÄULENFÜHRUNGSGESTELLS**
GUIDE COLUMN WITH CAGE RETAINER FOR A COLUMN GUIDE FRAME
COLONNE DE GUIDAGE À ORGANE DE RETENUE DE CAGE POUR UN BÂTI À GUIDAGE PAR COLONNES

(30) Priorität: 20.10.2016 DE 102016120054
(43) Veröffentlichungstag der Anmeldung: 28.08.2019
(73) Patentinhaber: Fibro GmbH, 74855 Hassmersheim (DE)
(72) Erfinder: ENGELHARDT, Stefan, 74336 Brackenheim-Dürrenzimmern (DE); SCHRECK, Georg, 74855 Hassmersheim (DE)
(74) Vertreter: Staeger & Sperling Partnerschaftsgesellschaft mbB
(86) Internationale Anmeldenummer: PCT/EP2017/076600
(87) Internationale Veröffentlichungsnummer: WO 2018/073300

(56) Entgegenhaltungen:
- EP-A1- 0 894 989
- DE-A1- 1 527 958
- FR-A1- 2 441 089
- US-A- 2 846 278
- US-A- 3 469 894
- US-A- 5 245 904

## Beschreibung

Die Erfindung betrifft eine Führungseinheit für ein Säulenführungsgestell, eine Transferpresse oder ein Folgeverbundwerkzeug in dem eine solche Führungseinheit eingesetzt werden kann.

Die vorliegende Erfindung bezieht sich demnach auf eine Verbesserung in einem
Säulenführungsgestell und auf eine Verbesserung in einer Presse oder eines Umformwerkzeug.

Ein Säulenführungsgestell ist zum Beispiel aus der DE 4410483 A1 bekannt und besitzt zwei stabile Platten, eine am oberen Ende und eine untere Platte. Die obere Platte (Stempelhalter) ist mit einer zylinderförmigen Führungssäule verbunden. Die untere Platte (Gesamthalter) ist mit einer zylindrischen Führungsbuchse verbunden. Die Führungssäule läuft durch einen zylinderförmigen Käfig hindurch, an dessen äußerer Seite sich die Führungsbüchse anlegt. Die Führungsbüchse, der Käfig und die Führungssäule führen das senkrechte sprich vertikale Gleiten der oberen Platte (Stempelhalter), während sie die Parallelität und Position mit der unteren Platte (Gesenkhalter) aufrechterhalten.

Üblicherweise wird ein Kugelkäfig zur Lagerung verwendet. Der Kugelkäfig hält drehbar eine Anzahl von Kugelwälzkörpern in einem im Wesentlichen zylinderförmigen Gehäuse. Die Dicke des Gehäuses ist geringer als der Durchmesser der Kugelwälzkörper, so dass die Kugelwälzkörper durch die Innenseite des Gehäuses hindurchreichen und die Führungssäule berühren, der Käfig jedoch nicht die Führungssäule berührt. Genauso berühren die Kugelwälzkörper die Führungsbüchse, welche den Kugelkäfig umgibt und um die Außenseite herum geführt wird. Wenn die Kugelwälzkörper rotieren, lassen sich Führungssäule, Kugelkäfig und Führungssäule dann gegenseitig verschieben.

Eine solche herkömmliche Führungssäule ist eine Säule, deren äußerer Durchmesser etwas geringer ist als der innere Durchmesser des Käfigs. Außerdem ist eine herkömmliche Führungsbüchse ein Zylinder, dessen innerer Durchmesser etwas größer ist als der äußere Durchmesser des Käfigs.

Aus den Druckschriften DE 75 16 838 U, EP 427 012 A1, EP 0 894 989 A1, FR 2 441 089 A1, US 3 469 894 A, US 5 245 904 A, DE 15 27 958 A und der US 2 846 278 A sind weitere Beispiels von Säulenführungsgestellen dargestellt. Insbesondere FR 2 441 089 A1 offenbart eine gattungsgemäße Führungssäule für ein Säulenführungsgestell.

Ein wesentliches Problem bei herkömmlichen Säulenführungsgestellen besteht in der Integration in eine Fertigungsanlage, bei der ein seitlicher Zugang erforderlich ist und z. B. mit einem Werkzeug oder einem Roboter seitlich in das Werkzeug eingegriffen werden muss. Die erforderlichen Säulenführungen sind in einem solchen Fall im Weg und versperren den freien Zugang zur Fertigungsposition oder dem Bauteil, welches innerhalb der Führungssäulen angeordnet ist.

Ein einfaches Trennen herkömmlicher Säulenführungsgestelle führt zu aufwändigen Montagen und Demontagen. Ferner besteht das Problem, dass die Lagereinheiten beim Trennen herunterfallen oder von der Führungssäule abrutschen.

Ferner bedarf es bei modernen Fertigungsanlagen einer gewissen Flexibilität, so dass ggf. Werkzeugoberhälften ausgetauscht werden oder durch andere Werkzeughälften zur Herstellung eines anderen Fertigungsteils schnell und zuverlässig zu ersetzen sind.

Dabei treten aber bei herkömmlichen Säulenführungsgestellen zahlreiche praktische und handwerkliche Probleme zu tage. Insbesondere sollte einzige Person oder ein vollautomatischer Wechsel oder das Trennen der Werkzeughälften möglich sein.

Der Erfindung liegt deshalb die Aufgabe zugrunde, vorbesagte Nachteile zu überwinden und eine Lösung bereit zu stellen, um ein einfaches, kostengünstiges und sicheres Trennen von Säulenführungsgestellen zu ermöglichen.

Diese Aufgabe wird durch die Merkmalskombination gemäß Patentanspruch 1 und Patentanspruch 7 gelöst.

Ein Grundgedanke der vorliegenden Erfindung liegt darin, die Führungssäulen so auszubilden, dass die Kugelkäfige am Ende der Führungssäule durch eine vorzugsweise in der Position verlagerbaren Käfighalter gegen Herabfallen oder Herausrutschen gesichert sind, indem ein innerhalb der Führungskontur angeordneter Anschlag am Käfighalter vorgesehen ist, an dem sich der Kugelkäfig axial abstützen kann.

Erfindungsgemäß wird demnach eine Führungseinheit für ein Säulenführungsgestell, in einer Transferpresse oder einem Folgeverbundwerkzeug vorgeschlagen, mit einem entlang dem Mantel (Außenmantel) der Führungssäule axialbeweglich gelagerten zylinderförmigen Kugelkäfig, wobei die Führungssäule einen Käfighalter besitzt bzw. aufweist, der in Axialrichtung (A) in seiner Lage höhenverstellbar an dem unteren freien Ende der Führungssäule befestigt ist und der Käfighalter einen Anschlag für den Kugelkäfig aufweist, um den Kugelkäfig gegen ein Herausrutschen oder Herabfallen aus bzw. von der Führungssäule zu sichern.

Mittels einer passenden geometrischen Abstimmung zwischen den Maßen der Führungssäule, des Kugelkäfigs und dem Käfighalter ist sicherzustellen, dass der Anschlag am Käfighalter nicht über die Hüllkurve des Kugelkäfigs hinausragt.

In einer erfindungsgemäßen Ausgestaltung ist vorgesehen, dass der Käfighalter zur Höhenverstellung drehbeweglich an der Führungssäule gelagert ist. Auf diese Weise kann der Käfighalter von einer ersten Eingriffsposition der Verbindungsabschnitte zwischen dem Käfighalter und der Führungssäule höhenverstellbar bis zu einer Endposition eingestellt bzw. eingeschraubt werden.

Es kann erfindungsgemäß auch vorgesehen werden, dass ein kurzer und ein langer Käfighalter bereitgestellt werden, wobei der Kurze Käfighalter eine Käfigvorlauflänge von x - y mm und der lange Käfighalter eine größere Vorlauflänge abdeckt. So können die Säulenführungsgestelle für unterschiedliche Eintauchtiefen der Säulenführungen und Vorlauflängen entsprechend einfach durch Verstellen des Käfighalters bzw. durch Umrüsten des jeweils geeigneten Käfighalters angepasst werden.

In einer erfindungsgemäßen Ausgestaltung ist weiter vorgesehen, dass der Käfighalter einen Verbindungsabschnitt aufweist, der mit einem Gewinde (vorzugsweiße einem Außengewinde) versehen ist, um den Käfighalter an einem führungssäulenseitigen Gegengewinde (vorzugsweise korrespondierenden Innengewinde) einzuschrauben.

Es ist weiter mit Vorteil vorgesehen, wenn der Käfighalter einen segmentweise, teilweise oder vollständig umlaufenden, vorzugsweise kragenförmigen Anschlag aufweist, um als Gegenlager für das untere stirnseitige Ende des zylinderförmigen Kugelkäfigs zu dienen. Mittels der erfindungsgemäßen Lösung, kann ein Kugelkäfig passender Länge einfach auf der Führungssäule montiert werden und mit dem Käfighalter gesichert werden. Vorteilhaft ist dabei, dass der Käfighalter mit seinem Verbindungsabschnitt in der Führungssäule integriert bzw. eingeschraubt ist, so dass der Käfighalter den Betrieb der Führungssäule auch in Axialrichtung nicht behindert.

Es kann insbesondere durch geeignete Auswahl der Gesamtlänge der Führungssäule zusammen mit dem Käfighalter die erforderliche Höhe des Säulenführungsgestells bestimmt werden.

Mit Vorteil ist ferner vorgesehen, dass der Käfighalter an der der Führungssäule zugewandte Seite des Anschlags (Oberseite des Anschlags) eine schräge Zentrierfläche aufweist, zur Zentrierung und/oder Lagesicherung des stirnseitigen unteren Endes des zylinderförmigen Kugelkäfigs. Durch einen mit Vorteil umlaufenden Kragen als Anschlag an dem die Oberseite des Kragens die besagte Schräge ausbildet, kann auf einfache Weise eine exakte Zentrierung des Kugelkäfigs erreicht werden.

In einer weiteren vorteilhaften Ausgestaltung der Erfindung ist vorgesehen, dass der Käfighalter an der der Führungssäule abgewandten unteren Seite und zwar am Übergang zwischen Unterseite und Mantelfläche einen Radius oder einer Rundung zur Buchsenvorzentrierung in einer Buchsenlagerung eines Säulenführungsgestells aufweist. Dies ist besonders vorteilhaft, um bei der Montage oder Umrüstung des Säulengestells das einfachere Einführen eines Werkzeugoberteils mit den Führungssäulen in die Buchsenführungen am Werkzeugunterteil vorzunehmen.

Eine weitere bevorzugte Ausgestaltung der Erfindung sieht vor, dass der Käfighalter eine in Axialrichtung (A) der Führungssäule und damit in Axialrichtung des Käfighalters, vorzugsweise wenigstens einmal abgestufte Längsbohrung oder eine entsprechende Montageöffnung aufweist.

Bevorzugt kann so mittels eines durch die Längsbohrung hindurchgeführten Befestigungsmittels der Käfighalter in seiner ansonsten höhenverstellbaren Montageposition an der Führungssäule fix befestigt werden, vorzugsweise an einem Innengewinde der Führungssäule verschraubt werden. Die Schraube dient dabei als Sicherungsschraube, um die einmal eingestellte Position des Käfighalters zu fixieren.

Ein weiterer Aspekt der vorliegenden Erfindung betrifft ein Säulenführungsgestell mit einer oder mehreren, der wie zuvor beschriebenen erfindungsgemäßen Führungssäulen. Die Führungssäulen sind bevorzugt an einer oberen Werkzeughälfte befestigt und sind mit ihrem unteren Enden an jeweiligen Buchsenführungen einer unteren Werkzeughälfte des Säulenführungsgestells hindurchgeführt und gelagert. Zur Trennung der oberen und unteren Werkzeughälften kann die obere Werkzeughälfte in Höhenrichtung aus der unteren Werkzeughälfte einfach herausgezogen werden, ohne dass es Sicherungsmaßnahmen gegen das unbeabsichtigte Herausrutschen der Käfige.

Eine Weiterbildung der Erfindung stellt ein Säulenführungsgestell mit wenigstens vier solcher Führungssäulen dar, wobei die obere Werkzeughälfte aus wenigstens einer Werkzeugplatte besteht, aus der die wenigstens vier Führungssäulen nach unten in Richtung der zweiten Werkzeughälfte hervorstehen und die unterer Werkzeughälfte aus wenigsten einer plattenförmigen Werkzeugbasis besteht, in oder an der zylinderförmige Buchsenführungen korrespondierend für die Führungssäulen befestigt sind. Ein solches Säulenführungsgestell kann in eine Fertigungsanlage, einem Folgeverbundwerkzeug oder bei einem Transferwerkzeug verwendet werden, wobei ein seitlicher Zugang quer zur Höhenrichtung gewährleistet ist, indem die Werkzeughälften einfach getrennt werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Seitenansicht mit einem Säulenführungsgestell;
- Fig. 2: eine Schnittansicht entlang der Schnittlinie A - A in Figur 1;
- Fig. 3: eine perspektivische Ansicht der Ausführungsform gemäß Figur 1;
- Fig. 4: eine Schnittansicht durch zwei Führungssäulen;
- Fig. 5: eine perspektivische Ansicht von zwei Ausführungsformen eines Käfighalters;
- Fig. 6: eine Schnittansicht durch die zwei Ausführungsformen gemäß Figur 5 und
- Fig. 7: das Detail D aus der Figur 4.

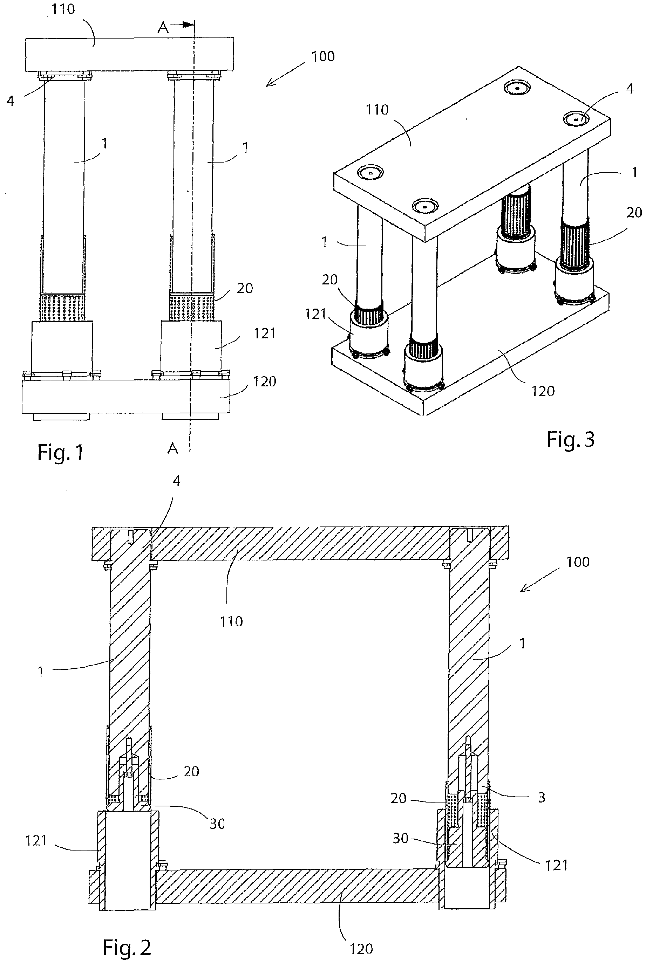

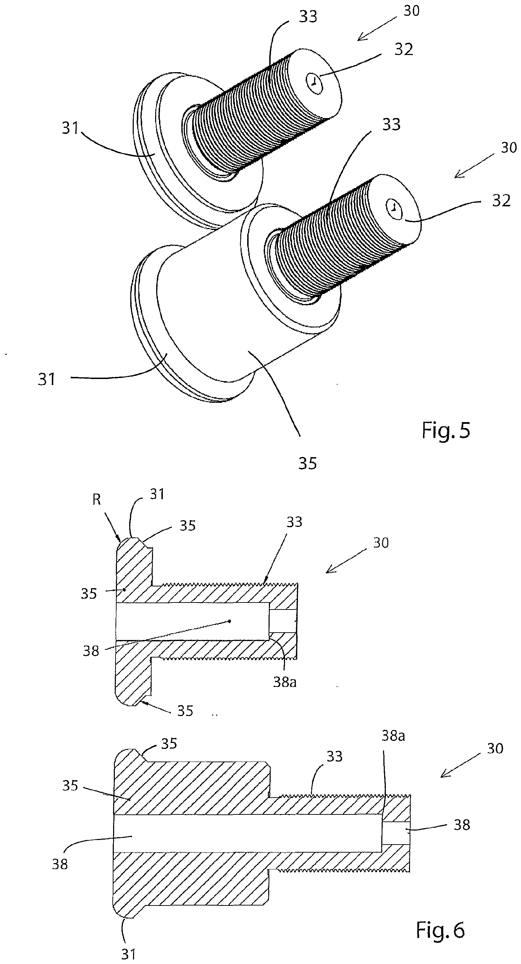

Im Folgenden wird die Erfindung mit Bezug auf die Figuren 1 bis 7 näher beschrieben, wobei gleiche Bezugszeichen auf gleiche funktionale und/oder strukturelle Merkmale hinweisen. In den Figuren 1 bis 3 ist eine Transferpresse mit einem Säulenführungsgestell 100 gezeigt.

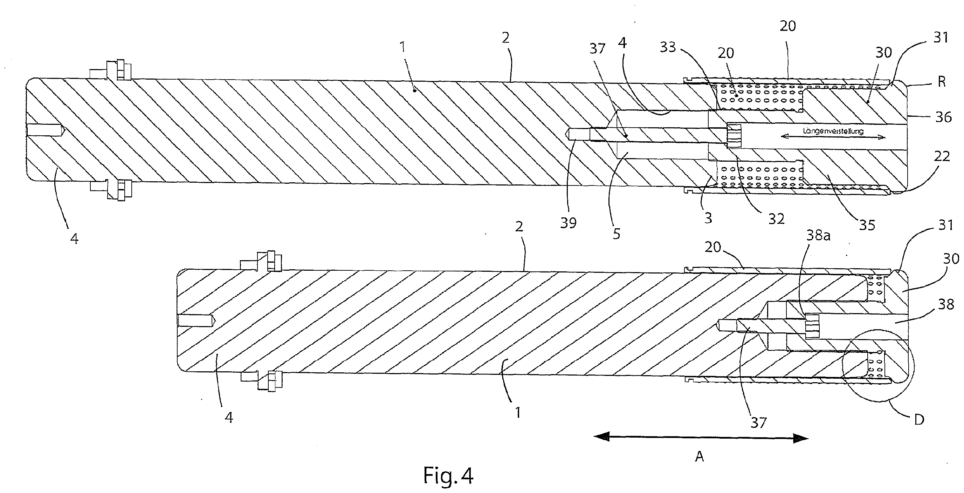

Das Säulenführungsgestell 100 ist mit vier Führungssäulen 1, wie in der Figur 4 gezeigt, ausgebildet. Das Säulenführungsgestell 100 umfasst eine obere Werkzeughälfte 110 und eine untere Werkzeughälfte 120. An der oberen Werkzeughälfte 110 sind die Führungssäulen 1 mit ihren Befestigungsabschnitten 4 befestigt. Die unteren Enden 3 der Führungssäulen 1 ragen in die jeweiligen Buchsenführungen 121 der unteren Werkzeughälfte 120 hinein.

Die Figur 2 zeigt eine Schnittansicht entlang der Schnittlinie A - A in Figur 1 und stellt eine bestimmungsgemäß eingeführte Führungssäule 1 auf der rechten Seite dar, während bei der linken Führungssäule 1 der Kugelkäfig 20 gerade nicht mehr in Eingriff mit der darunter liegenden Buchsenführung 121 der unteren Werkzeughälfte 120 ist, da bei den beiden linken Führungssäulen 1 jeweils eine kurze Ausführung eines Käfighalters 30 vorgesehen ist.

Die Fig. 3 zeigt eine perspektivische Ansicht der Ausführungsform gemäß Figur 1 bei der die zuvor genannten zwei hinteren Führungssäulen 1 mit den kurzen Käfighaltern 30 gerade nicht mehr in Eingriff mit den darunter liegenden Buchsenführungen 121 der unteren Werkzeughälfte 120 sind.

Die Fig. 4 zeigt eine Schnittansicht durch zwei beispielhafte erfindungsgemäße Führungssäulen 1. In der oberen Ansicht ist eine Ausführung mit einem langen Käfighalter 30 und in der unteren Ansicht eine Ausführung mit einem kurzen Käfighalter 30 gezeigt.

Die Führungssäule 1 ist generell ausgebildet für ein Säulenführungsgestell, in einer Transferwerkzeug, einem Folgeverbundwerkzeug und dergleichen, mit einem entlang dem Mantel 2 der Führungssäule 1 axialbeweglich gelagerten zylinderförmigen Kugelkäfig 20, wobei die Führungssäule 1 einen Käfighalter 30 besitzt, der in Axialrichtung A in seiner Lage höhenverstellbar an dem unteren freien Ende 3 der Führungssäule 1 befestigt ist.

Der Käfighalter 30 weist einen Anschlag 31 für den Kugelkäfig 20 auf, um den Kugelkäfig 20 gegen ein Herausrutschen oder Herabfallen aus bzw. von der Führungssäule 1 zu sichern. Der Käfighalter 30 ist zur Höhenverstellung drehbeweglich an der Führungssäule 1 über ein Gewinde 32, 33 gelagert. Hierzu besitzt der Käfighalter 30 einen Verbindungsabschnitt 32, der mit einem Gewinde 33 versehen ist, um den Käfighalter 30 an einem führungssäulenseitigen Gegengewinde 4 einzuschrauben.

Das Gegengewinde 4 ist in einer axialen Bohrung 5 der Führungssäule 1 angebracht. Der Verbindungsabschnitt 32 des Käfighalters 30 ragt von einer Basis 35 axial hervor und besitzt einen zum Innengewinde in der axialen Bohrung 5 passendes Gegengewinde. Die Länge des Verbindungsabschnitts 32 des Käfighalters 30 ist auf die Tiefe der Bohrung 5 abgestimmt, so dass sich der komplette Verbindungsabschnitt 32 des Käfighalter 30 in die axiale Bohrung am freien Ende 3 der Führungssäule 1 einschrauben lässt.

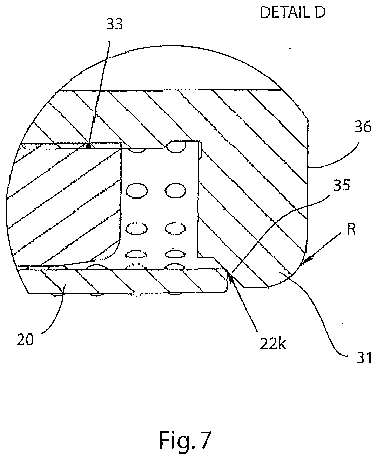

Der Käfighalter 30 bildet, wie in den Figuren 4 bis 6 ersichtlich, einen vollständig umlaufenden kragenförmigen Anschlag 31 auf, um als Gegenlager für das untere stirnseitige Ende 22 des Kugelkäfigs 20 zu dienen. Der Käfighalter 30 bildet hierzu an der der Führungssäule 1 zugewandten Seite des Anschlags 31 eine schräge Zentrierfläche 35 aus und zwar zur Zentrierung und Lagesicherung des stirnseitigen unteren Endes 22 des zylinderförmigen Kugelkäfigs 20, wie dies gut im Detail D in der Figur 7 ersichtlich ist. Die stirnseitige Kante 22k des Kugelkäfigs 20 liegt gegen die schräge Zentrierfläche 35 an.

Der Käfighalter 30 weist ferner an der der Führungssäule 1 abgewandten unteren Seite 36 im Übergang zur Mantelfläche einen Radius R oder eine Rundung oder eine ähnliche konstruktive Form zur Buchsenvorzentrierung in einer Buchsenlagerung 121 eines Säulenführungsgestells 100 auf.

Der Käfighalter 30 weist, wie in der Schnittansicht der Figur 4 ersichtlich eine in Axialrichtung A über die Stufe 38a abgestufte Längsbohrung 38 auf, so dass die Bohrung einen Abschnitt mit einem ersten Durchmesser und einen zweiten Abschnitt mit einem zweiten Durchmesser aufweist. Der Käfighalter 30 ist mittels eines durch die Längsbohrung hindurchgeführten Befestigungsmittels 37 an der Führungssäule 1 befestigt, und zwar an einem Innengewinde 39 der Führungssäule verschraubt.

## Patentansprüche

1. Führungssäule (1) für ein Säulenführungsgestell (100), ein Transferwerkzeug oder ein Folgeverbundwerkzeug, mit einem entlang dem Mantel (2) der Führungssäule (1) axialbeweglich gelagerten zylinderförmigen Kugelkäfig (20), wobei die Führungssäule (1) einen Käfighalter (30) besitzt, der in Axialrichtung (A) in seiner Lage höhenverstellbar an dem unteren freien Ende (3) der Führungssäule (1) befestigt ist und der Käfighalter (30) einen Anschlag (31) für den Kugelkäfig (20) aufweist, um den Kugelkäfig (20) gegen ein Herausrutschen oder Herabfallen aus bzw. von der Führungssäule (1) zu sichern und wobei der Käfighalter (30) einen Verbindungsabschnitt (32) ausbildet, der mit einem Gewinde (33) versehen ist, womit der Käfighalter (30) an einem führungssäulenseitigen Gegengewinde (4) eingeschraubt ist und der Käfighalter (30) zur Höhenverstellung drehbeweglich an der Führungssäule (1) gelagert ist

2. Führungssäule (1) gemäß Anspruch 1, **dadurch gekennzeichnet, dass** der Käfighalter (30) einen segmentweise, teilweise oder vollständig umlaufenden, vorzugsweise kragenförmigen Anschlag (31) aufweist, um als Gegenlager für das untere stirnseitige Ende (22) des Kugelkäfigs (20) zu dienen.

3. Führungssäule (1) gemäß einem der vorhergehenden Ansprüche, **dadurch gekennzeichnet, dass** der Käfighalter (30) an der der Führungssäule (1) zugewandten Seite des Anschlags (31) eine schräge Zentrierfläche (35) aufweist, zur Zentrierung und Lagesicherung des stirnseitigen unteren Endes des zylinderförmigen Kugelkäfigs (20).

4. Führungssäule (1) gemäß einem der vorhergehenden Ansprüche, **dadurch gekennzeichnet, dass** der Käfighalter (30) an der der Führungssäule (1) abgewandten unteren Seite (35) im Übergang zur Mantelfläche (36) einen Radius (R) oder einer Rundung zur Buchsenvorzentrierung in einer Buchsenlagerung (121) eines Säulenführungsgestells (100) aufweist.

5. Führungssäule (1) gemäß einem der vorhergehenden Ansprüche, **dadurch gekennzeichnet, dass** der Käfighalter (30) eine in Axialrichtung (A) vorzugsweise wenigstens einmal abgestufte Längsbohrung (34) aufweist.

6. Führungssäule (1) gemäß dem Anspruch 5, **dadurch gekennzeichnet, dass** der Käfighalter (30) mittels eines durch die Längsbohrung hindurchgeführten Befestigungsmittel (37) an der Führungssäule (1) befestigt, vorzugsweise an einem Innengewinde (38) der Führungssäule verschraubt ist.

7. Säulenführungsgestell (100) mit einer oder mehreren Führungssäulen (1) gemäß einem der Ansprüche 1 bis 8, wobei die Führungssäulen (1) an einer oberen Werkzeughälfte (110) befestigt sind und mit ihrem unteren, die jeweiligen Kugelkäfige (20) aufweisenden Enden an jeweiligen Buchsenführungen (121) einer unteren Werkzeughälfte (120) des Säulenführungsgestell (100) hindurchgeführt und gelagert sind und zur Trennung der oberen und unteren Werkzeughälften (110, 120) die obere Werkzeughälfte (110) in Höhenrichtung aus der unteren Werkzeughälfte (120) herausgezogen werden kann.

8. Säulenführungsgestell (100) mit wenigstens vier Führungssäulen (1) gemäß einem der Ansprüche 1 bis 9, wobei die obere Werkzeughälfte (110) aus wenigstens einer Werkzeugplatte (112) besteht, aus der die wenigstens vier Führungssäulen (1) nach unten in Richtung der zweiten Werkzeughälfte (120) hervorstehen und die unterer Werkzeughälfte aus wenigsten einer plattenförmigen Werkzeugbasis (123) besteht, in oder an der zylinderförmige Buchsenführungen (121) korrespondierend für die Führungssäulen (1) befestigt sind.

## Claims

1. A guide column (1) for a column guide frame (100), a transfer tool or a follow-on composite tool, with a cylindrical ball cage (20) that is mounted so as to be axially displaceable along the jacket (2) of the guide column (1), wherein the guide column (1) has a cage holder (30) that is secured in position to the lower free end (3) of the guide column (1) so as to be height-adjustable in the axial direction (A), and the cage holder (30) has a stop (31) for the ball cage (20) for securing the ball cage (20) slipping out or falling from the guide column (1), and wherein the cage holder (30) forms a connecting section (32) that is provided with a thread (33) with which the cage holder (30) is screwed in on a mating thread (4), the cage holder (30) being rotatably mounted on the guide column (1) for the purpose of height adjustment.

2. The guide column (1) as set forth in claim 1, **characterized in that** the cage holder (30) has a segment-wise, partially or completely circumferential, preferably collar-shaped stop (31) in order to act as a counter-bearing for the lower front-side end (22) of the ball cage (20).

3. The guide column (1) as set forth in one of the preceding claims, **characterized in that** the cage holder (30) has an inclined centering surface (35) on the side of the stop (31) facing the guide column (1) for the purpose of centering and securing the position of the front-side lower end of the cylindrical ball cage (20).

4. The guide column (1) as set forth in one of the preceding claims, **characterized in that** the cage holder (30) has a radius (R) or a rounding on the lower side (35) facing away from the guide column (1) in the transition to the lateral surface (36) for bush precentering in a bush bearing (121) of a column guide frame (100).

5. The guide column (1) as set forth in one of the preceding claims, **characterized in that** the cage holder (30) has a longitudinal bore (34) that is preferably stepped at least once in the axial direction (A).

6. The guide column (1) as set forth in claim 5, **characterized in that** the cage holder (30) is secured to the guide column (1) by means of a fastening means (37) that is passed through the longitudinal bore, preferably screwed to an internal thread (38) of the guide column.

7. A guide column frame (100) with one or more guide columns (1) as set forth in one of claims 1 to 8, wherein the guide columns (1) are secured to an upper tool half (110) and, with their lower ends having the respective ball cages (20), are passed through and supported at respective bush guides (121) of a lower tool half (120) of the column guide frame (100), and wherein the upper tool half (110) can be pulled out of the lower tool half (120) in the vertical direction in order to separate the upper and lower tool halves (110, 120).

8. The guide column frame (100), comprising at least four guide columns (1) as set forth in one of claims 1 to 9, wherein the upper tool half (110) consists of at least one tool plate (112) from which the at least four guide columns (1) protrude downward in the direction of the second tool half (120), and the lower tool half consists of at least one plate-shaped tool base (123) in or on which the cylindrical bushing guides (121) are secured correspondingly for the guide columns (1).

## Revendications

1. Colonne de guidage (1) pour un bloc à colonnes de guidage (100), un outil de transfert ou un outil à suivre composé, comprenant une cage à billes cylindrique (20), montée de manière axialement mobile le long de l'enveloppe (2) de la colonne de guidage (1), la colonne de guidage (1) possédant un support de cage (30) qui est fixé à l'extrémité libre inférieure (3) de la colonne de guidage (1) de manière réglable en hauteur dans sa position dans la direction axiale (A), et le support de cage (30) présentant une butée (31) pour la cage à billes (20) afin de protéger la cage à billes (20) contre un glissement ou une chute hors de la colonne de guidage (1), et le support de cage (30) réalisant une partie de liaison (32) qui est munie d'un filetage (33) par lequel le support de cage (30) est vissé sur un contre-filetage (4) côté colonne de guidage et le support de cage (30) étant monté rotatif sur la colonne de guidage (1) pour le réglage de la hauteur.

2. Colonne de guidage (1) selon la revendication 1, **caractérisée en ce que** le support de cage (30) présente une butée (31) périphérique par segments, en partie ou entièrement, de préférence en forme de collerette, afin de servir de palier-support pour l'extrémité frontale inférieure (22) de la cage à billes (20).

3. Colonne de guidage (1) selon l'une quelconque des revendications précédentes, **caractérisée en ce que** le support de cage (30) présente sur le côté de la butée (31), tourné vers la colonne de guidage (1), une surface de centrage oblique (35) permettant de centrer et de bloquer en position l'extrémité inférieure frontale de la cage à billes cylindrique (20)

4. Colonne de guidage (1) selon l'une quelconque des revendications précédentes, **caractérisée en ce que** le support de cage (30) présente sur le côté inférieur (35), détourné de la colonne de guidage (1), à la transition vers la surface d'enveloppe (36) un rayon (R) ou un arrondi pour précentrer le coussinet dans un palier à coussinet (121) d'un bloc à colonnes de guidage (100).

5. Colonne de guidage (1) selon l'une quelconque des revendications précédentes, **caractérisée en ce que** le support de cage (30) présente un perçage longitudinal (34), de préférence gradué au moins une fois dans la direction axiale (A).

6. Colonne de guidage (1) selon la revendication 5, **caractérisée en ce que** le support de cage (30) est fixé à la colonne de guidage (1) à l'aide d'un moyen de fixation (37) amené à passer par le perçage longitudinal, de préférence vissé sur un taraudage (38) de la colonne de guidage.

7. Bloc à colonnes de guidage (100) comprenant une ou plusieurs colonnes de guidage (1) selon l'une quelconque des revendications 1 à 8, dans lequel les colonnes de guidage (1) sont fixées à une moitié d'outil supérieure (110) et sont amenées à passer et sont montées par leurs extrémités inférieures, présentant les cages à billes (20) respectives, au niveau de guidages de coussinet (121) respectives d'une moitié d'outil inférieure (12) du bloc à colonnes de guidage, et pour séparer les moitiés d'outil supérieure et inférieure (110, 120), la moitié d'outil supérieure (110) peut être extraite de la moitié d'outil inférieure (120) dans la direction verticale.

8. Bloc à colonnes de guidage (100) comprenant au moins quatre colonnes de guidage (1) selon l'une quelconque des revendications 1 à 9, dans lequel la moitié d'outil supérieure (110) est composée d'au moins une plaque d'outil (112), à partir de laquelle les au moins quatre colonnes de guidage (1) font saillie vers le bas en direction de la deuxième moitié d'outil (120), et la moitié d'outil inférieure est composée d'au moins une base d'outil en forme de plaque (123) dans ou sur laquelle des guidages de coussinet cylindriques (121) pour les colonnes de guidage (1) sont fixés de manière correspondante.
